# EUROPEAN PATENT SPECIFICATION

(11) **EP 4 528 879 B1**
(45) Date of publication and mention of the grant of the patent: **09.09.2026**
(21) Application number: 22951549.9
(22) Date of filing: 21.07.2022
(51) Int. Cl.: H01M 10/058, H01M 50/593, H01M 10/0525, H01M 50/477, H01M 50/557, H01M 50/103, H01M 50/145, H01M 50/15, H01M 50/553, H01M 50/183, H01M 50/474, H01M 50/586, H01M 50/533

(54) **BATTERY CELL, BATTERY AND ELECTRIC DEVICE**
BATTERIEZELLE, BATTERIE UND ELEKTRISCHE VORRICHTUNG
ÉLÉMENT DE BATTERIE, BATTERIE ET DISPOSITIF ÉLECTRIQUE

(43) Date of publication of application: 26.03.2025
(60) Divisional application: 26197055.2
(73) Proprietor: Contemporary Amperex Technology (Hong Kong) Limited, Central and Western District (HK)
(72) Inventor: CHENG, Qi, Ningde, Fujian 352100 (CN); HUANG, Quanzhuang, Ningde, Fujian 352100 (CN); WANG, Hong, Ningde, Fujian 352100 (CN); CHEN, Wenwei, Ningde, Fujian 352100 (CN); LI, Quankun, Ningde, Fujian 352100 (CN)
(74) Representative: Gong, Jinping
(86) International application number: PCT/CN2022/107142
(87) International publication number: WO 2024/016275

(56) References cited:
- CN-A- 114 365 344
- CN-U- 215 266 598
- CN-U- 215 989 141
- CN-U- 216 085 077
- CN-U- 216 872 217
- JP-A- 2009 140 707
- US-A1- 2014 186 692
- US-B2- 10 547 030

## Description

### Technical Field

The present disclosure relates to the field of battery technologies, and in particular, to a battery cell, a battery, and an electrical device.

### Background Art

Secondary batteries, especially lithium-ion batteries, have advantages such as high voltage, high specific energy, long cycle life, no pollution, wide operating temperature range, and small self-discharge, have been widely used in portable electronic devices and power devices of large new energy electric vehicles, and have significance for solving human environmental pollution and energy crisis. With the wide use of the lithium-ion batteries, the service reliability of the batteries has become a closely concerned issue for users. CN215989141U mentions a secondary battery with a first insulating member comprising a convex portion and a second insulating member comprising a protruding portion. US10547030B2 relates to a secondary battery including a case, an electrode assembly inserted in the case and a cap plate sealing the case. The battery comprises a first insulation plate and a second insulation plate. CN114365344A describes a battery comprising two insulating members abut against each other. US20140186692A1 describes a rechargeable battery including a gasket and an insulation plate.

### Summary

In one aspect of the present disclosure, a battery cell is provided, including:
an end cover assembly including a cover plate and a second isolation member disposed on the cover plate;
an electrode assembly including a main body; and
a first isolation member located between the end cover assembly and the main body and configured to limit the main body,
where the second isolation member is configured to limit the first isolation member.

The first isolation member located between the end cover assembly and the main body of the electrode assembly can separate the main body and the end cover assembly to prevent damage of the electrode assembly due to collision between the main body and the end cover assembly. The first isolation member limits a relative position of the main body relative to the first isolation member by limiting the main body, combined with the limiting effect of the second isolation member disposed on the cover plate on the first isolation member, to effectively limit relative positions of the electrode assembly and the end cover assembly and reduce risks of damage and even short-circuiting of the electrode assembly due to movement of the electrode assembly caused by vibration and the like when the battery cell is used.

The second isolation member is configured to limit the first isolation member in at least one of a first direction and a second direction, and to be in clearance fit with the first isolation member in at least one of the first direction and the second direction, where the first direction and the second direction are perpendicular to each other and both perpendicular to a thickness direction of the cover plate.

The second isolation member may limit the first isolation member in the first direction, or the second direction, or the first direction and the second direction. The first direction and the second direction are two orthogonal directions perpendicular to the thickness direction of the cover plate, respectively. The second isolation member can limit the relative positions of the second isolation member and the first isolation member in the corresponding limit direction by limiting the first isolation member in the first direction, or the second direction, or the first direction and the second direction, to prevent unnecessary relative displacement between the two. The foregoing limit direction may be selected based on factors such as placement manner and usage environment of the battery cell, so as to avoid the risks such as damage or short-circuiting of the electrode assembly when the battery cell is used and further improve the service reliability of the battery cell.

The limiting effect of the second isolation member on the first isolation member in at least one of the first direction and the second direction is achieved by clearance fit, which can effectively reduce the possibility of interference between the second isolation member and the first isolation member during assembly, reduce assembly difficulties, and avoid assembly difficulties or unsuccessful assembly problems caused by manufacturing errors of components or errors in operation of assembly tools.

In some embodiments, in the first direction, a distance g1 between the first isolation member and the second isolation member is 0.1-1 mm, and/or in the second direction, a distance g2 between the first isolation member and the second isolation member is 0.1-1 mm.

For the clearance fit, a too large fit clearance cannot effectively limit the relative positions of the second isolation member and the first isolation member, while a too small fit clearance will increase assembly difficulties. Therefore, in order to effectively reduce the assembly difficulties, the clearance of 0.1-1 mm between the second isolation member and the first isolation member in the first direction and/or the second direction can achieve a reliable limiting effect and reduce the assembly difficulties.

In some embodiments, the main body is flat, and the first direction is a thickness direction of the main body.

For the electrode assembly with a flat main body, the first direction and the second direction may be the thickness direction and width direction of the main body, respectively. Correspondingly, the limiting effect of the second isolation member on the first isolation member, combined with the limiting effect of the first isolation member on the main body, can effectively prevent unnecessary displacement of the main body in its thickness or width direction relative to the end cover assembly, thereby reducing the risk of damage to the main body during movement.

In some embodiments, the second isolation member is configured to limit the first isolation member in the thickness direction of the cover plate, and to be in clearance fit with the first isolation member in the thickness direction of the cover plate.

The first isolation member limits the second isolation member in the thickness direction of the cover plate, so that the main body can also be limited in displacement relative to the end cover assembly in the thickness direction of the cover plate, to prevent movement of the electrode assembly in the thickness direction of the cover plate, thereby further improving the service reliability of the battery cell.

The limiting effect of the second isolation member on the first isolation member in the thickness direction of the cover plate is achieved by clearance fit, which can effectively reduce the possibility of interference between the second isolation member and the first isolation member during assembly, reduce assembly difficulties, and avoid assembly difficulties or unsuccessful assembly problems caused by manufacturing errors of components or errors in operation of assembly tools.

In some embodiments, in the thickness direction of the cover plate, a distance g3 between the first isolation member and the second isolation member is 0.1-1 mm.

For the clearance fit, a too large fit clearance cannot effectively limit the relative positions of the second isolation member and the first isolation member, while a too small fit clearance will increase assembly difficulties. Therefore, in order to effectively reduce the assembly difficulties, the clearance of 0.1-1 mm between the second isolation member and the first isolation member in the thickness direction of the cover plate can achieve a reliable limiting effect and reduce the assembly difficulties.

The first isolation member abuts against a surface, adjacent to the main body, of the cover plate and encloses a cavity together with the cover plate, and the second isolation member is at least partially located in the cavity.

In this embodiment, the first isolation member abuts against the surface, adjacent to the main body, of the cover plate, which can achieve a supporting effect of the first isolation member on the cover plate and the main body and limit the relative positions of the cover plate and the main body in the thickness direction of the cover plate. Moreover, the second isolation member may usually be used for setting elements such as a pole on the cover plate. The second isolation member may be accommodated with other elements in the cavity enclosed by the first isolation member and the cover plate, and is protected and limited by the first isolation member.

In some embodiments, the end cover assembly further includes a pole disposed on the cover plate, the electrode assembly further includes a tab located at an end, adjacent to the end cover assembly, of the main body, the tab passes through a channel of the first isolation member and is electrically connected to the pole, and at least a portion of the pole and the tab are both located in the cavity.

The tab on the main body passes through the first isolation member and is electrically connected to the pole on the cover plate through a connector or directly. The cavity formed by the cover plate and the first isolation member accommodates at least a portion of the pole and the tab, and provides a sufficient space for the electrical connection of the bent tab with the pole, thereby ensuring the reliability of the electrical connection and improving the service stability of the battery cell. Moreover, the first isolation member further effectively limits the movement of the main body relative to the end cover assembly in the thickness direction of the cover plate by maintaining the passing tab and supporting the main body and the cover plate, to prevent the risk of open circuit or short circuit caused by pulling and tearing the tab.

In some embodiments, the tab is bent on a side adjacent to the cover plate, the bent portion of the tab is fixedly connected to an end, adjacent to the main body, of the pole, and in the thickness direction of the cover plate, a minimum distance D between the channel and the end, adjacent to the main body, of the pole satisfies: $2 * t \leq D \leq 6 * t ;$
where t is a thickness of the tab.

In order to increase an electrical connection area between the tab and the pole, the tab may be bent, and the bent portion is in contact and fixed connection with an end face of the pole, thereby achieving a reliable electrical connection. The minimum distance between the channel and the end of the pole reflects the size of the space used for accommodating the bent tab. If the size is too large, more space of the main body will be occupied to reduce electric quantity of the battery cell. However, if the size is too small, the space for accommodating the bent tab is insufficient, which easily causes the tab to be pulled by the movement of the main body relative to the end cover assembly after the tab is connected to the pole, leading to problems such as tearing of the tab.

In the thickness direction of the cover plate, the distance D is not less than 2 times the thickness of the tab and not more than 6 times the thickness of the tab, which can ensure a reliable electrical connection of the fully bent tab with the pole without being easily torn and ensure that a larger main body can be used to achieve a larger electric quantity of the battery cell as much as possible.

In some embodiments, an inner wall surface of the cavity includes a step surface, the step surface is in clearance fit with the second isolation member in the thickness direction of the cover plate, and the second isolation member is configured to limit the step surface in the thickness direction of the cover plate.

The step surface is disposed on the inner wall surface of the cavity enclosed by the first isolation member and the cover plate. Through the clearance fit between the step surface and the end face of the second isolation member in the thickness direction, the limiting effect of the second isolation member on the first isolation member in the thickness direction of the cover plate and the clearance fit relationship can be conveniently achieved.

In some embodiments, the inner wall surface of the cavity further includes a first inner wall segment and a second inner wall segment divided by the step surface in the thickness direction of the cover plate, the first inner wall segment is located on a side, away from the cover plate, of the second inner wall segment, the second inner wall segment is in clearance fit with the second isolation member in at least one of the first direction and the second direction, and the second isolation member is configured to limit the second inner wall segment in at least one of the first direction and the second direction, where the first direction and the second direction are perpendicular to each other and both perpendicular to the thickness direction of the cover plate.

In the cavity enclosed by the first isolation member and the end cover assembly, different functions are implemented through spaces enclosed by the first inner wall segment and the second inner wall segment divided by the step surface, respectively, where the second isolation member can achieve the limiting effect and clearance fit on the second inner wall segment in at least one of the first direction and the second direction, and the first inner wall segment can accommodate the bent tab connected to the pole.

In some embodiments, in the first direction, a spatial width w1 corresponding to the first inner wall segment is less than a spatial width w2 corresponding to the second inner wall segment; and/or in the second direction, a spatial width w1 corresponding to the first inner wall segment is less than a spatial width w2 corresponding to the second inner wall segment.

The second inner wall segment has a larger spatial width w2, which can allow for the use of a larger second isolation member, thereby facilitating the arrangement of other elements on the cover plate and the second isolation member. The first inner wall segment has a smaller spatial width w1 to accommodate the tab and allow for the use of a thicker structure in the first inner wall segment, so as to increase the strength and stiffness of the first isolation member and improve its stability in support between the end cover assembly and the main body.

In some embodiments, in the first direction, a thickness t1 of a portion, corresponding to the first inner wall segment, of the first isolation member is greater than a thickness t2 of a portion, corresponding to the second inner wall segment, of the first isolation member; and/or in the second direction, a thickness t1 of a portion, corresponding to the first inner wall segment, of the first isolation member is greater than a thickness t2 of a portion, corresponding to the second inner wall segment, of the first isolation member.

In this embodiment, the thickness t2 of the first isolation member corresponding to the second inner wall segment is less than the thickness t1 corresponding to the first inner wall segment, which can increase the size of the space enclosed by the second inner wall segment and allow for the use of a larger second isolation member, thereby facilitating the arrangement of other elements on the cover plate and the second isolation member. Because the first inner wall segment usually only needs to accommodate the tab and does not require much space, the thickness of the first isolation member corresponding to the first inner wall segment is correspondingly larger, which can effectively increase the strength and stiffness of the first isolation member, thereby improving the stability of support of the first isolation member between the end cover assembly and the main body.

In some embodiments, the first isolation member has an outer surface adjacent to the main body in the thickness direction of the cover plate and in contact with a portion of the tab, and the outer surface is provided with the channel for the tab to pass through and communicate with the cavity; and in the thickness direction of the cover plate, a distance H1 between an end, away from the channel, of the outer surface and the cover plate is greater than a distance H2 between an end, adjacent to the channel, of the outer surface and the cover plate.

The first isolation member has the inclined outer surface in contact with the tab and provides the channel for the tab to enter the cavity via the channel. The distance H1 between the end, away from the channel, of the inclined outer surface and the cover plate is greater than the distance H2 between the end, adjacent to the channel, of the outer surface and the cover plate, which can achieve a shape after the plurality of tab layers at one end of the main body are folded, achieve a more stable and reliable limiting effect between the tab and the first isolation member, and correspondingly limit the relative position of the main body in the first direction.

In some embodiments, the first isolation member includes at least two detachable brackets, and the at least two brackets are combined to enclose, together with the cover plate, the cavity and the channel in communication with the cavity.

For the first isolation member with a split structure, when the at least two brackets are combined, the tab can be first extended from one end of the main body, and after the combination into the first isolation member, the tab passing through the clearance on the first isolation member can be maintained by the clearance. This structure can effectively reduce assembly difficulties between the electrode assembly and the first isolation member and improve assembly efficiency.

In some embodiments, the end cover assembly includes the cover plate, and in the thickness direction of the cover plate, a projection of the first isolation member on a surface of the cover plate is located within a projection of the main body on the surface of the cover plate.

In order to mount the first isolation member and the main body into the shell of the battery cell more easily, the projection of the first isolation member on the surface of the cover plate in the thickness direction of the cover plate can be located within the projection of the main body on the surface of the cover plate in the thickness direction of the cover plate, which is equivalent to recessing of the first isolation member relative to the surface of the main body, so as not to interfere with the mounting process, but to reduce assembly difficulties of the battery cell and improve assembly efficiency of the battery cell.

In one aspect of the present disclosure, a battery is provided, including the foregoing battery cell. The battery including the foregoing battery cell can effectively improve service reliability.

In one aspect of the present disclosure, an electrical device is provided, including the foregoing battery. The electrical device including the foregoing battery can effectively improve service reliability.

### Brief description of Drawings

In order to explain the technical solutions of the embodiments of the present disclosure more clearly, the following will briefly introduce the drawings that need to be used in the embodiments of the present disclosure. Obviously, the drawings described below are only some embodiments of the present disclosure. A person of ordinary skill in the art can obtain other drawings based on the drawings without creative work.

With reference to the drawings, the present disclosure may be understood more clearly according to the following detailed description.
FIG. 1 is a schematic structural diagram of some embodiments of an electrical device according to the present disclosure;
FIG. 2 is a schematic exploded diagram of some embodiments of a battery according to the present disclosure;
FIG. 3 is a schematic exploded diagram of some embodiments of a battery cell according to the present disclosure;
FIG. 4 is a schematic enlarged diagram of an area corresponding to circle A in FIG. 3;
FIG. 5 is a partial schematic diagram of a mounting structure of an end cover assembly, an electrode assembly, and a first isolation member in some embodiments of a battery cell according to the present disclosure from the perspective of a first direction x;
FIG. 6 is a right view of FIG. 5;
FIG. 7 is a schematic structural diagram of an AA section in FIG. 5;
FIG. 8 is a schematic diagram of some structural dimensions in FIG. 7;
FIG. 9 is a schematic diagram of some structural dimensions in a mounting structure of a cover plate, a second isolation member, and a first isolation member in FIG. 7;
FIG. 10 is a schematic diagram of some structural dimensions in the mounting structure of FIG. 9 after the second isolation member is removed;
FIG. 11 is a schematic structural diagram of a BB section in FIG. 6; and
FIG. 12 is a schematic enlarged diagram of an area enclosed by circle C in FIG. 11.

It should be understood that the size of each part shown in the drawings is not drawn according to an actual proportional relation. Moreover, the same or similar reference signs denote the same or similar components.

Reference numerals are described as follows:
10: battery cell; 11: shell; 12: end opening;
20: end cover assembly; 21: cover plate; 22: second isolation member; 23: pole; 24: sealing member; 25: terminal plate; 26: liquid injection mechanism;
30: electrode assembly; 31: main body; 32: tab;
40: first isolation member; 40a, 40b: bracket; 41: first inner wall segment; 42: second inner wall segment; 43: step structure; 44: hot melt column; 45: mounting boss; 46: channel; 47: outer surface;
50: battery; 51: box;
60: vehicle; 61: controller; 62: motor.

### Detailed Description of Embodiments

Implementations of the present disclosure will be further described in detail below in conjunction with the accompanying drawings and embodiments. The detailed description of the following embodiments and the drawings are used for illustrating the principle of the present disclosure, but cannot be used for limiting the scope of the present disclosure, that is, the present disclosure is not limited to the described embodiments.

In the description of the present disclosure, it should be noted that, unless otherwise specified, "a plurality of" means two or more; and the orientations or positional relationships indicated by the terms "upper", "lower", "left", "right", "inner", "outer", and the like are only for facilitating description of the present disclosure and simplifying the description, but do not indicate or imply that an apparatus or element referred to must have a specific orientation or be constructed and operated in a specific orientation, so the terms cannot be understood as limiting the present disclosure. In addition, the terms "first", "second", "third", and the like are for descriptive purposes only and should not be understood as indicating or implying relative importance. "Vertical" is not strictly vertical, but within an allowable range of error. "Parallel" is not strictly parallel, but within an allowable range of error.

The orientation terms appearing in the following description all indicate directions shown in the drawings, and are not intended to limit specific structures of the present disclosure. In the description of the present disclosure, it should also be noted that, unless otherwise specified and defined, the terms "mounted", "connected", and "connection" should be broadly understood, for example, the "connection" may be fixed connection, detachable connection, integral connection, direct connection, or indirect connection by a medium. Those of ordinary skill in the art may understand the specific meanings of the foregoing terms in the present disclosure according to specific circumstances.

Some implementations of the present invention will be described in detail below with reference to the drawings. The features in the following embodiments can be combined with each other on a non-conflict basis.

In a battery cell of some related technologies, an electrode assembly may move within a shell due to changes in the motion state of a battery, external force, or the like when the battery cell is used. The movement of the electrode assembly within the shell may pull the connection between a tab and a pole to cause a risk of loose electrical connection or tearing of the tab, so that the electrode assembly is damaged and even short-circuited.

In view of this, the embodiments of the present disclosure provide a battery cell, a battery, and an electrical device, where the service reliability of the battery can be improved.

The battery cell in the embodiments of the present disclosure may include lithium-ion secondary batteries, lithium-ion primary batteries, lithium-sulfur batteries, sodium lithium-ion batteries, sodium-ion batteries, magnesium-ion batteries, or the like, which are not limited by the embodiments of the present disclosure. The battery cell may be cylindrical, flat, cuboid, or in other shapes, which is also not limited by the embodiments of the present disclosure.

The battery cell in the embodiments of the present disclosure may be applicable to various batteries. Batteries may be used for supplying power to electrical device such as vehicles, such as supplying power for vehicle control or driving. A battery may include a shell and a battery module, the shell is used for providing an accommodating space for the battery module, and the battery module is mounted inside the shell. The shell may be made of a metal material. The battery module may include a plurality of battery cells connected in series, in parallel, or in series and parallel. The battery cell is a minimum unit that constitutes the battery. The battery cell includes an electrode assembly that can undergo electrochemical reactions.

The battery in the embodiments of the present disclosure may be applicable to various electrical devices using batteries. The electrical device may be a mobile phone, a portable device, a notebook computer, a scooter, an electric vehicle, a ship, a spacecraft, an electric toy, or an electric tool. For example, the spacecraft includes an airplane, a rocket, a space shuttle, a spaceship, or the like; the electric toy includes a fixed or mobile electric toy, such as a game console, an electric car toy, an electric ship toy, or an electric aircraft toy; and the electric tool includes a metal cutting electric tool, a grinding electric tool, an assembly electric tool, or a railway electric tool, such as an electric drill, an electric grinder, an electric wrench, an electric screwdriver, an electric hammer, an impact electric drill, a concrete vibrator, or an electric planer. The embodiments of the present disclosure do not limit the foregoing electrical devices.

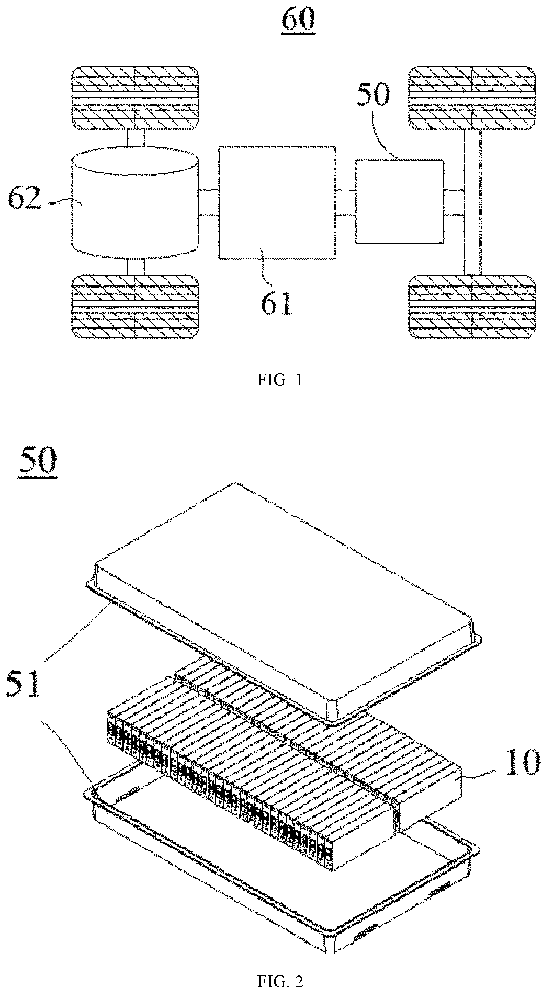

FIG. 1 is a schematic structural diagram of some embodiments of an electrical device according to the present disclosure. For convenience, the electrical device is a vehicle as an example for explanation. The vehicle 60 may be a fuel-powered vehicle, a gas-powered vehicle, or a new energy vehicle, and the new energy vehicle may be a battery electric vehicle, a hybrid vehicle, or the like. A battery 50 may be disposed at a bottom, head, or tail of the vehicle 60.

The battery 50 may be used for supplying power to the vehicle 60. For example, the battery 50 may be used as an operation power supply of the vehicle 60 for a circuit system of the vehicle 60, for example, for a working power demand of the vehicle 60 during startup, navigation and running. The battery 50 may be used not only as an operation power supply of the vehicle 60, but also as a driving power supply of the vehicle 60 to replace or partially replace fuel or natural gas to provide driving force for the vehicle 60.

Axles, wheels, a motor 62, and a controller 61 may be further disposed inside the vehicle 60. The controller 61 is used for controlling the battery 50 to supply power to the motor 62. For example, when the vehicle 60 uses the battery 50 as a driving power supply, the controller 61 can provide the motor 62 with necessary power for uniform speed and acceleration. The motor 62 is used for driving the axles to rotate, so as to drive the wheels to rotate.

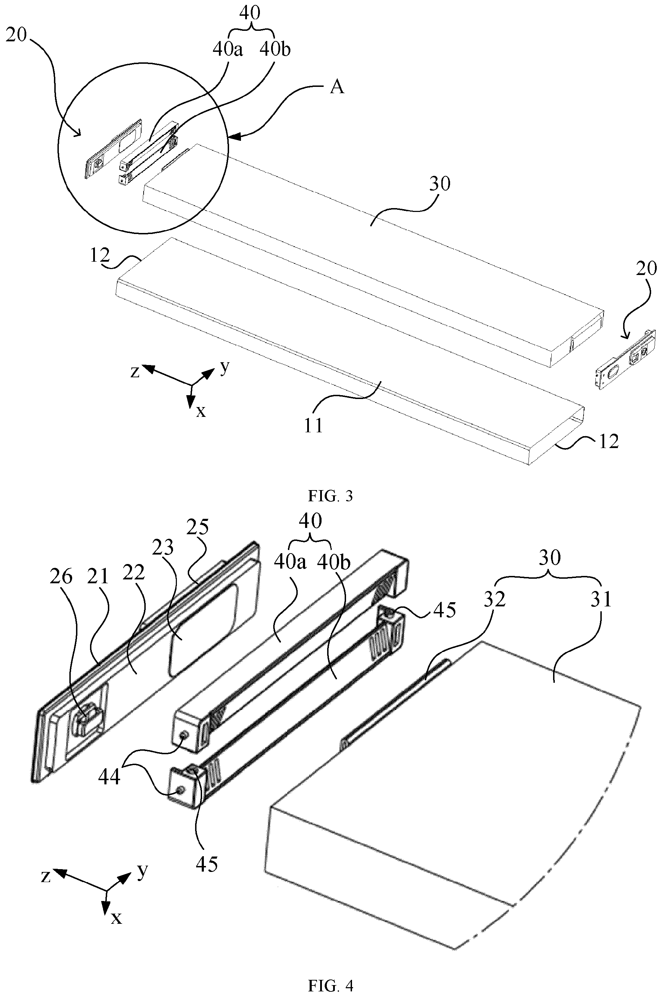

FIG. 2 is a schematic structural diagram of some embodiments of a battery according to the present disclosure. FIG. 3 is a schematic exploded diagram of some embodiments of a battery cell according to the present disclosure. FIG. 4 is a schematic enlarged diagram of an area corresponding to circle A in FIG. 3.

With reference to FIG. 2, in some embodiments, the battery 50 includes a box 51 and one or more battery cells 10 disposed in the box 51. The box 51 can provide cooling, sealing, and collision prevention functions for the battery cell 10, and can also avoid adverse effects of liquids or other foreign objects on the charging and discharging or safety of the battery cell.

With reference to FIG. 2, the battery cells 10 are electrically connected, such as in series, in parallel, or in series and parallel, to achieve required electrical performance parameters of the battery 50. The plurality of battery cells 10 are disposed in rows, and one or more rows of battery cells 10 may be disposed in the box as needed.

In some embodiments, the battery cells 10 of the battery 50 may be arranged in at least one of a length direction and a width direction of the box. At least one row or column of battery cells 50 may be disposed according to actual needs. One or more layers of battery cells 10 may also be disposed in a height direction of the battery 50 as needed.

In some embodiments, the plurality of battery cells 10 may first be connected in series, in parallel, or in series and parallel to form a battery module, and then a plurality of battery modules are connected in series, in parallel, or in series and parallel to form a whole accommodated in the box 51. In other embodiments, all the battery cells 10 are directly connected in series, in parallel, or in series and parallel together, and then the whole formed by all the battery cells 10 is accommodated in the box.

With reference to FIG. 3, in the embodiment of the present disclosure, the battery cell 10 includes: an end cover assembly 20, an electrode assembly 30, and a first isolation member 40. The battery cell 10 may further include a shell 11 and other structures (not shown in the figure), such as an insulation film sheathed outside the electrode assembly 30 to separate the electrode assembly 30 and the shell 11.

The shell 11 may have a cavity and an end opening 12 in communication with the cavity. The cavity of the shell 11 may be used for accommodating the electrode assembly 30 and an electrolytic solution. The end opening 12 is used for allowing the electrode assembly 30 to enter the cavity via the end opening 12 when the battery cell is mounted. The shape of the shell 11 may be determined by the shape of one or more electrode assemblies 30 accommodated in the cavity, for example, the shape of the shell 11 is a hollow rectangle, a hollow cube, or a hollow cylinder. The shell 11 may be made of a metal (such as aluminum or aluminum alloy) or non-metallic material (plastic) with certain hardness and strength.

The end cover assembly 20 may be disposed on the end opening 12 on at least one side of the shell 11 to close the end opening 12 and form a closed cavity with the shell 11 to accommodate the electrode assembly 30. In some embodiments, the end opening 12 is disposed at one end of the shell 11, and correspondingly, the end cover assembly 20 is disposed at the end opening 12 to close the end opening 12 on that side. In other embodiments, end openings 12 are disposed at two ends of the shell 11, and correspondingly, the battery cell 10 includes two end cover assemblies 20, which are disposed at the end openings 12 on two sides of the shell respectively.

The electrode assembly 30 includes a main body 31. The electrode assembly 30 may further include a tab 32 located in at least one end of the main body 31 and extending away from the main body. The tab 32 may be electrically connected to a pole 23 on a cover plate 21 through a conductive connector or directly. The tab 32 may include a plurality of tab layers, which may be folded and overlapped together and bent to be connected to the pole.

The main body 31 may include a positive electrode plate, a negative electrode plate, and a separator located between the positive electrode plate and the negative electrode plate. The operation of the battery cell is implemented by migration of internal metal ions between the positive electrode plate and the negative electrode plate.

The positive electrode plate includes a positive electrode current collector and a positive electrode active material layer. The positive electrode tab refers to a metal conductor introduced from the positive electrode plate, and is connected to or formed on the positive electrode current collector and used for series connection or parallel connection to other portions of the battery cell. Taking a lithium-ion battery as an example, a material of the positive electrode current collector may be aluminum, and a positive electrode active material may be a lithium material that can provide lithium ions, such as lithium cobaltate, lithium iron phosphate, ternary lithium, or lithium manganate. In a case that the positive electrode current collector and the positive electrode active material layer are bonded by a bonding material, the bonding material may be polyvinylidene fluoride (PVDF) or the like.

The negative electrode plate includes a negative electrode current collector and a negative electrode active material layer. The negative electrode tab refers to a metal conductor introduced from the negative electrode plate, and is connected to or formed on the negative electrode current collector and used for series connection or parallel connection to other portions of the battery cell. Taking the lithium-ion battery as an example, a material of the negative electrode current collector may be copper, and a negative electrode active material may be a material that can store lithium ions, such as graphite, silicon, or lithium titanate. In a case that the negative electrode current collector and the negative electrode active material layer are bonded by a bonding material, the bonding material may be carboxymethyl cellulose, epoxy resin, styrene butadiene rubber, or the like.

A material of the separator may be polypropylene (PP), polyethylene (PE), or the like. The electrolytic solution includes an electrolyte and a solvent. The electrolyte is an organic metal salt, an inorganic salt, or the like, which can provide metal ions that shuttle between the positive electrode plate and the negative electrode plate. To ensure enough over-current capacity, a plurality of positive electrode tabs may be used and laminated together, and a plurality of negative electrode tabs may be used and laminated together. Moreover, the electrode assembly may be of a wound structure or a laminated structure, and the embodiments of the present disclosure are not limited thereto.

The first isolation member 40 is located between the end cover assembly 20 and the main body 31 and configured to limit the main body 31. The limit here may be used for limiting the absence of relative motion between the main body 31 and the first isolation member 40, or limiting only a limited relative displacement between the main body 31 and the first isolation member 40. The direction of the limit may be a single direction or include a plurality of orthogonal directions.

The first isolation member 40 may be made of an insulating material such as plastic. The first isolation member 40 may be of an integral structure or a split structure that may be split and combined. The tab 32 of the electrode assembly 30 may pass through the first isolation member 40 and be electrically connected to the pole 23. The first isolation member 40 may be fixedly connected to a component inside the battery cell 10, for example, fixed by hot melting with a side support plate fixedly disposed on a side of the main body. Correspondingly, a hot melt column 44 may be disposed on the first isolation member 40.

The first isolation member 40 located between the end cover assembly 20 and the main body 31 of the electrode assembly 30 can separate the main body 31 and the end cover assembly 20 to prevent damage of the electrode assembly 30 due to collision between the main body 31 and the end cover assembly 20. The first isolation member 40 further limits a relative position of the main body 31 relative to the first isolation member 40 by limiting the main body 31, to avoid risks of damage and even short-circuiting of the electrode assembly 30 due to movement of the main body 31 caused by vibration and the like when the battery cell is used.

With reference to FIG. 3, the end cover assembly 20 includes a cover plate 21 and a second isolation member 22 disposed on the cover plate 21. The cover plate 21 of the end cover assembly 20 may be made of a metal (such as aluminum or aluminum alloy) or non-metallic material (plastic) with certain hardness and strength. The cover plate 21 and the shell 11 may be fixedly connected by welding or bonding or through a connector. Some functional components, such as a pole, a sealing structure, a liquid injection mechanism, and a pressure relief mechanism electrically connected to the electrode assembly 30, may be disposed on the cover plate 21.

The second isolation member 22 may be fixedly connected to a surface, adjacent to the electrode assembly 30, of the cover plate 21. The pole 23 on the cover plate 21 may be inserted in an area enclosed by the second isolation member 22 and electrically connected to the electrode assembly 30. The second isolation member 22 may be made of an insulating material, for example, a plastic member is used as the second isolation member 22.

In FIG. 3 and FIG. 4, the third direction z is a thickness direction of the cover plate 21, the first direction x and the second direction y are both perpendicular to the third direction z, and the first direction x is perpendicular to the second direction y. With reference to FIG. 3 and FIG. 4, for an embodiment of a battery cell with a flat main body 31, the first direction x may be a thickness direction of the main body 31, correspondingly, the second direction y is a width direction of the main body 31, and the third direction z is a length direction of the main body 31.

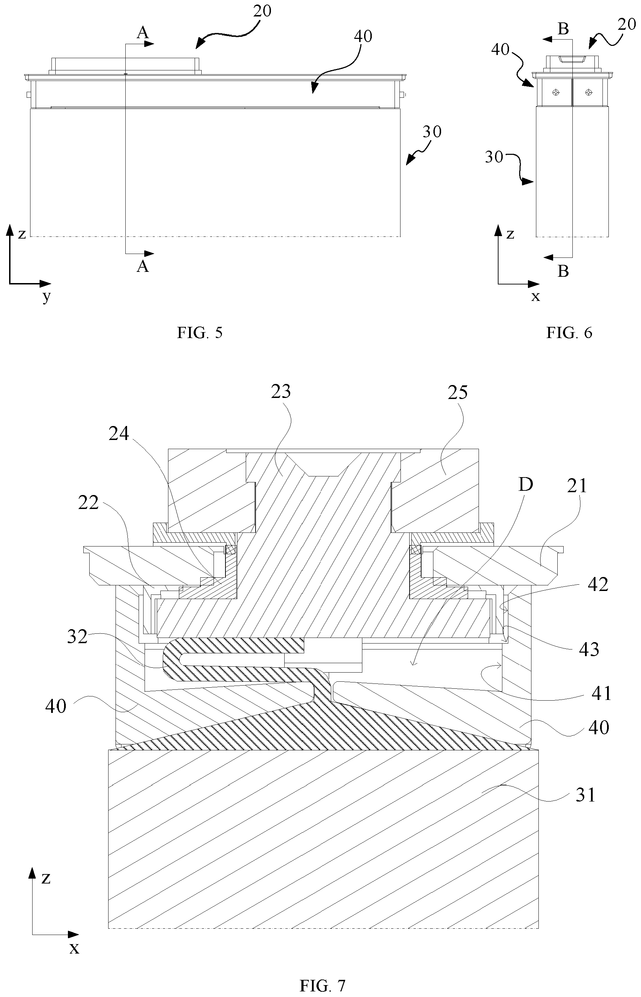

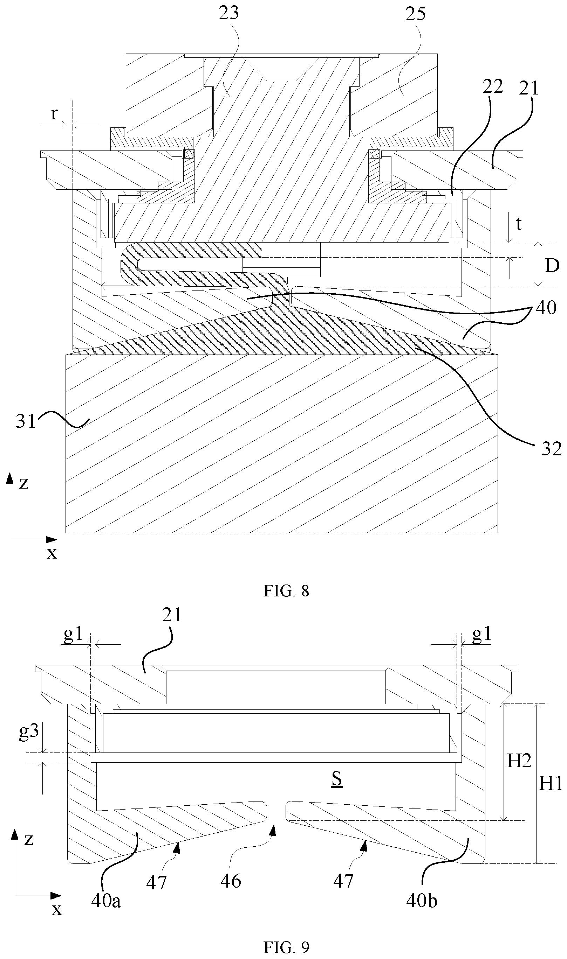

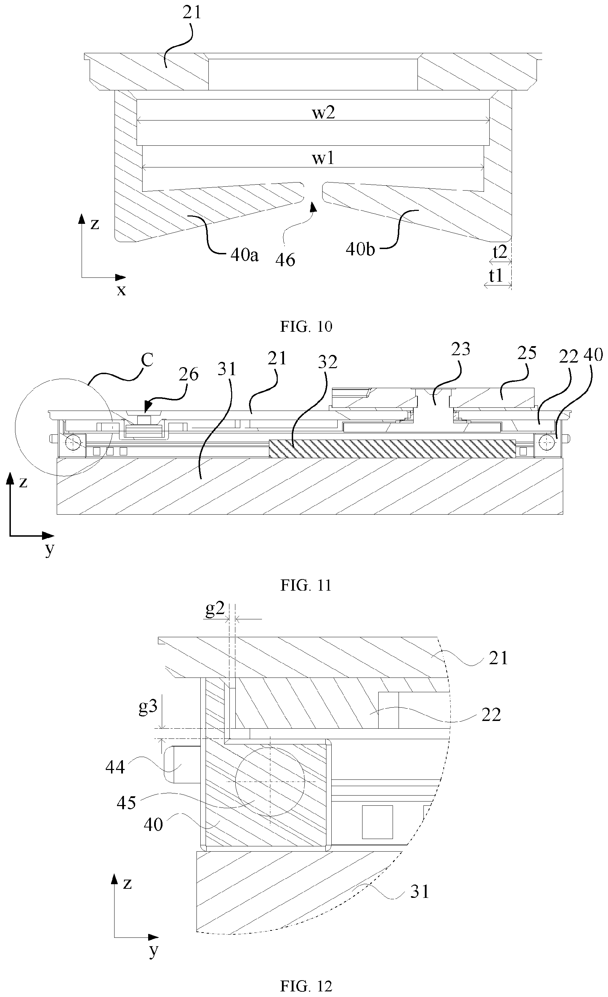

FIG. 5 is a partial schematic diagram of a mounting structure of an end cover assembly, an electrode assembly, and a first isolation member in some embodiments of a battery cell according to the present disclosure from the perspective of a first direction x. FIG. 6 is a right view of FIG. 5. FIG. 7 is a schematic structural diagram of an AA section in FIG. 5. FIG. 8 is a schematic diagram of some structural dimensions in FIG. 7. FIG. 9 is a schematic diagram of some structural dimensions in a mounting structure of a cover plate, a second isolation member, and a first isolation member in FIG. 7. FIG. 10 is a schematic diagram of some structural dimensions in the mounting structure of FIG. 9 after the second isolation member is removed. FIG. 11 is a schematic structural diagram of a BB section in FIG. 6. FIG. 12 is a schematic enlarged diagram of an area enclosed by circle C in FIG. 11.

With reference to FIG. 5 to FIG. 12, the second isolation member 22 is configured to limit the first isolation member 40. The second isolation member 22 disposed on the cover plate 21 has a limiting effect on the first isolation member 40, combined with the limiting effect of the first isolation member 40 on the main body 31, to effectively limit relative positions of the electrode assembly 30 and the end cover assembly 20, and to reduce risks of damage and even short-circuiting of the electrode assembly 30 due to movement of the electrode assembly 30 caused by vibration and the like when the battery cell is used. Moreover, the second isolation member 22 can further assist the first isolation member 40 in more effectively maintaining support and limitation for the main body by limiting the first isolation member 40.

With reference to FIG. 3 to FIG. 7, in some embodiments, the second isolation member 22 is configured to limit the first isolation member 40 in at least one of the first direction x and the second direction y, and to be in clearance fit with the first isolation member 40 in at least one of the first direction x and the second direction y, where the first direction x and the second direction y are perpendicular to each other and perpendicular to the thickness direction of the cover plate 21.

The second isolation member 22 may limit the first isolation member 40 in the first direction x, or the second direction y, or the first direction x and the second direction y. The first direction x and the second direction y are two orthogonal directions perpendicular to the thickness direction of the cover plate 21, respectively.

The second isolation member 22 can limit relative positions of the second isolation member 22 and the first isolation member 40 in the corresponding limit direction by limiting the first isolation member 40 in the first direction x, or the second direction y, or the first direction x and the second direction y, to prevent unnecessary relative displacement between the two.

The foregoing limit direction may be selected based on factors such as placement manner and usage environment of the battery cell 10, so as to avoid risks such as damage or short-circuiting of the electrode assembly 30 when the battery cell 10 is used and further improve the service reliability of the battery cell 10.

The limiting effect of the second isolation member 22 on the first isolation member 40 in at least one of the first direction x and the second direction y is achieved by clearance fit, which can effectively reduce the possibility of interference between the second isolation member 22 and the first isolation member 40 during assembly, reduce assembly difficulties, and avoid assembly difficulties or unsuccessful assembly problems caused by manufacturing errors of components or errors in operation of assembly tools.

For the clearance fit, a too large fit clearance cannot effectively limit the relative positions of the second isolation member 22 and the first isolation member 40, while a too small fit clearance will increase assembly difficulties. Therefore, in order to effectively reduce the assembly difficulties, with reference to FIG. 9, in the first direction x, the distance g1 between the first isolation member and the second isolation member is 0.1-1 mm, such as 0.3 mm, 0.5 mm, or 0.8 mm. With reference to FIG. 10, in the second direction, the distance g2 between the first isolation member and the second isolation member is 0.1-1 mm, such as 0.3 mm, 0.5 mm, or 0.8 mm. The clearance of 0.1-1 mm between the second isolation member 22 and the first isolation member 40 in the first direction x and/or the second direction y can achieve a reliable limiting effect and reduce assembly difficulties.

With reference to FIG. 3 and FIG. 4, in some embodiments, the main body 31 is flat, and the first direction x or the second direction y is the thickness direction of the main body 31. For the electrode assembly 30 with a flat main body 31, the first direction x and the second direction y may be the thickness direction and width direction of the main body 31, respectively. Correspondingly, the limiting effect of the second isolation member 22 on the first isolation member 40, combined with the limiting effect of the first isolation member 40 on the main body 31, can effectively prevent unnecessary displacement of the main body 31 in its thickness or width direction relative to the end cover assembly 20, thereby reducing the risk of damage to the main body 31 during movement.

The second isolation member 22 can not only limit the relative position of the first isolation member 40 in a direction perpendicular to the thickness direction of the cover plate 21, but also limit the first isolation member 40 in the thickness direction of the cover plate 21. In some embodiments, the second isolation member 22 is further configured to limit the first isolation member 40 in the thickness direction of the cover plate 21, and to be in clearance fit with the first isolation member 40 in the thickness direction of the cover plate 21. In this case, the relative positions of the main body 31 and the end cover assembly 20 in the thickness direction of the cover plate 21 are limited, thereby preventing movement of the electrode assembly 30 in the thickness direction of the cover plate 21 and further improving the service reliability of the battery cell 10.

The limiting effect of the second isolation member 22 on the first isolation member 40 in the thickness direction of the cover plate 31 is achieved by clearance fit, which can effectively reduce the possibility of interference between the second isolation member 22 and the first isolation member 40 during assembly, reduce assembly difficulties, and avoid assembly difficulties or unsuccessful assembly problems caused by manufacturing errors of components or errors in operation of assembly tools.

For the clearance fit, a too large fit clearance cannot effectively limit the relative positions of the second isolation member 22 and the first isolation member 40, while a too small fit clearance will increase assembly difficulties. In order to effectively reduce assembly difficulties, with reference to FIG. 9, in the thickness direction of the cover plate 31, the distance g3 between the first isolation member 40 and the second isolation member 22 is 0.1-1 mm, such as 0.3 mm, 0.5 mm, or 0.8 mm. This can achieve a reliable limiting effect and reduce assembly difficulties.

With reference to FIG. 5, in some embodiments, the first isolation member 40 abuts against a surface, adjacent to the main body 31, of the cover plate 21 and encloses a cavity S with the cover plate 21. The second isolation member 22 is at least partially located in the cavity S. In this embodiment, the first isolation member 40 abuts against the surface, adjacent to the main body 31, of the cover plate 21, which can achieve a supporting effect of the first isolation member 40 on the cover plate 21 and the main body 31 and limit the relative positions of the cover plate 21 and the main body 31 in the thickness direction of the cover plate 21.

The second isolation member 22 may usually be used for setting elements such as a pole 23 on the cover plate 21. The second isolation member 22 may be accommodated with other elements in the cavity enclosed by the first isolation member 40 and the cover plate 21, and is protected and limited by the first isolation member 40. In addition, the second isolation member 22 is at least partially located in the cavity S, so that the first isolation member 40 and the second isolation member 22 can share a portion of a spatial size, the spatial size occupied by the first isolation member 40 and the second isolation member 22 in the battery cell can be reduced, and the size of the electrode assembly can be increased to obtain more electricity.

In FIGs. 4, 5, and 11, the end cover assembly 20 may further include a pole 23 disposed on the cover plate 21. The pole 23 may be sealed by a sealing member 24 disposed on the cover plate 21 to achieve a sealed connection of the pole 23 on the cover plate 21. A terminal plate 25 may be further disposed on a side, away from the main body 31, of the cover plate 21, and the terminal plate 25 is fixedly connected to the pole 23 and may be made of a metal conductive material, such as aluminum. The end cover assembly 20 may include a liquid injection mechanism 26 disposed on the cover plate 21 for injecting an electrolytic solution into the shell.

The electrode assembly 30 may further include a tab 32 located at an end, adjacent to the end cover assembly 20, of the main body 31, the tab 32 passes through a channel 46 of the first isolation member 40 and is electrically connected to the pole 23, and at least a portion of the pole 23 and the tab 32 are located in the cavity S.

The tab 32 on the main body 31 passes through the first isolation member 40 and is electrically connected to the pole 23 on the cover plate 21 through a connector or directly. The cavity formed by the cover plate 21 and the first isolation member 40 accommodates at least a portion of the pole 23 and the tab 32, and provides a sufficient space for the electrical connection of the bent tab 32 with the pole 23, thereby ensuring the reliability of the electrical connection and improving the service stability of the battery cell 10.

Moreover, the first isolation member 40 further effectively limits the movement of the main body 31 relative to the end cover assembly 20 in the thickness direction of the cover plate 21 by maintaining the passing tab 32 and supporting the main body 31 and the cover plate 21, to prevent the risk of open circuit or short circuit caused by pulling and tearing the tab 32.

In order to increase an electrical connection area between the tab 32 and the pole 23, the tab 32 may be bent, and the bent portion is in contact and fixed connection with an end face of the pole 23, thereby achieving a reliable electrical connection. In FIG. 7 and FIG. 8, the tab 32 may include a plurality of tab layers, which may be folded up to a centerline position of the main body 21, pass through the first isolation member 40, and be connected to the pole 23 after being bent.

With reference to FIG. 8, in some embodiments, the tab 32 is bent on a side adjacent to the cover plate 21, the bent portion of the tab 32 is fixedly connected to an end, adjacent to the main body 31, of the pole 23, and in the thickness direction of the cover plate 21, a minimum distance D between the channel 46 and the end, adjacent to the main body 31, of the pole 23 satisfies: 2 * t ≤ D ≤ 6 * t, for example, D may be equal to 2 * t, 3.5 * t, 4.8 * t, or 5.6 * t, where t is a thickness of the tab 32. For a tab structure with a plurality of folded tab layers, the thickness of the tab 32 is a sum of thicknesses of the plurality of tab layers.

D reflects the size of the space used for accommodating the bent tab 32. If the size is too large, more space of the main body 31 will be occupied to reduce electric quantity of the battery cell 10. However, if the size is too small, the space for accommodating the bent tab 32 is insufficient, which easily causes the tab 32 to be pulled by the movement of the main body 31 relative to the end cover assembly 20 after the tab 32 is connected to the pole 23, leading to problems such as tearing of the tab 32.

In the thickness direction of the cover plate 21, D is not less than 2 times the thickness of the tab 32 and not more than 6 times the thickness of the tab 32, which can ensure a reliable electrical connection of the fully bent tab 32 with the pole 23 without being easily torn and ensure that a larger main body 31 can be used to achieve a larger electric quantity of the battery cell 10 as much as possible.

With reference to FIG. 7 to FIG. 10, in some embodiments, an inner wall surface of the cavity S includes a step surface 43. The step surface 43 may be continuous or segmented in a circumferential direction of the cavity S. The step surface 43 may be in clearance fit with the second isolation member 22 in the thickness direction of the cover plate 21. The second isolation member 22 is configured to limit the step surface 43 in the thickness direction of the cover plate 21, thereby facilitating the limiting effect of the second isolation member 22 on the first isolation member 40 in the thickness direction of the cover plate 21 and the clearance fit relationship.

The step surface 43 may divide the inner wall surface of the cavity S into a first inner wall segment 41 and a second inner wall segment 42. For the first inner wall segment 41 and the second inner wall segment 42 divided by the step surface 43, the first inner wall segment 41 is located on a side, away from the cover plate 21, of the second inner wall segment 42, and may be used for accommodating the bent tab 32 connected to the pole 23.

The second inner wall segment 42 is in clearance fit with the second isolation member 22 in at least one of the first direction x and the second direction y. The second isolation member 22 is configured to limit the second inner wall segment 42 in at least one of the first direction x and the second direction y.

With reference to FIG. 10, in some embodiments, in the first direction x, a spatial width w1 corresponding to the first inner wall segment 41 is less than a spatial width w2 corresponding to the second inner wall segment 42; and/or in the second direction y, a spatial width w1 corresponding to the first inner wall segment 41 is less than a spatial width w2 corresponding to the second inner wall segment 42. FIG. 10 shows the spatial widths w1 and w2 corresponding to the first inner wall segment 41 and the second inner wall segment 42 in the first direction x, respectively, and it can be seen that w1 is less than w2. In the second direction y, the spatial width corresponding to the first inner wall segment 41 can also be less than the spatial width corresponding to the second inner wall segment 42.

The second inner wall segment 42 has a larger spatial width w2, which can allow for the use of a larger second isolation member 22, thereby facilitating the arrangement of other elements on the cover plate 21 and the second isolation member. The first inner wall segment 41 has a smaller spatial width to accommodate the tab 32 and allow for the use of a thicker structure in the first inner wall segment 41, so as to increase the strength and stiffness of the first isolation member 40 and improve its stability in support between the end cover assembly 20 and the main body 31.

With reference to FIG. 10, in some embodiments, in the first direction x, a thickness t1 of a portion, corresponding to the first inner wall segment 41, of the first isolation member 40 is greater than a thickness t2 of a portion, corresponding to the second inner wall segment 42, of the first isolation member 40; and/or in the second direction y, a thickness t1 of a portion, corresponding to the first inner wall segment 41, of the first isolation member 40 is greater than a thickness t2 of a portion, corresponding to the second inner wall segment 42, of the first isolation member 40. FIG. 10 shows that the thickness t1 is greater than the thickness t2 in the first direction x. The thickness t1 of the first isolation member 40 in the second direction y may also be greater than the thickness t2.

In this embodiment, the thickness t2 of the first isolation member 40 corresponding to the second inner wall segment 42 is less than the thickness t1 corresponding to the first inner wall segment 41, which can increase the size of the space enclosed by the second inner wall segment and allow for the use of a larger second isolation member 22, thereby facilitating the arrangement of other elements on the cover plate 21 and the second isolation member 22.

Because the first inner wall segment 41 usually only needs to accommodate the tab 32 and does not require much space, the thickness of the first isolation member corresponding to the first inner wall segment 41 is correspondingly larger, which can effectively increase the strength and stiffness of the first isolation member 40, thereby improving the stability of support of the first isolation member 40 between the end cover assembly 20 and the main body 31.

With reference to FIG. 9, in some embodiments, the first isolation member 40 has an outer surface 47 adjacent to the main body 31 in the thickness direction of the cover plate 21 and in contact with a portion of the tab 32, and the outer surface 47 is provided with the channel 46 for the tab 32 to pass through and communicate with the cavity S; and in the thickness direction of the cover plate 21, a distance H1 between an end, away from the channel 46, of the outer surface 47 and the cover plate 21 is greater than a distance H2 between an end, adjacent to the channel 46, of the outer surface 47 and the cover plate 21.

In FIG. 8 and FIG. 9, the first isolation member 40 has the inclined outer surface 47 in contact with the tab 32 formed by folding a plurality of tab layers, and provides the channel 46 for the tab 32, so that the tab 32 enters the cavity S via the channel 46. The distance H1 between the end, away from the channel 46, of the inclined outer surface 47 and the cover plate 21 is greater than the distance H2 between the end, adjacent to the channel 46, of the outer surface 47 and the cover plate 21, which can achieve a shape after the plurality of tab layers at one end of the main body 31 are folded, achieve a more stable and reliable limiting effect between the tab 32 and the first isolation member 40, and correspondingly limit the relative position of the main body 31 in the first direction x.

In order to mount the first isolation member 40 and the main body 31 into the shell of the battery cell 10 more easily, with reference to FIG. 5, in some embodiments, in the thickness direction of the cover plate 21, a projection of the first isolation member 40 on a surface of the cover plate 21 is located within a projection of the main body 31 on the surface of the cover plate 21. This is equivalent to recessing of the first isolation member 40 relative to the surface of the main body 31. In FIG. 8, it can be seen that the surface of the first isolation member 40 is recessed by a size r relative to the surface of the main body 31, so as not to interfere with the mounting process, but to reduce assembly difficulties of the battery cell 10 and improve assembly efficiency of the battery cell 10.

With reference to FIGs. 4, 9, and 10, in the foregoing embodiments of the battery cell, the first isolation member 40 may include at least two detachable brackets 40a and 40b. The at least two brackets 40a and 40b are combined to enclose, together with the cover plate, the cavity S and the channel 46 in communication with the cavity S.

For the first isolation member 40 with a split structure, for example, when the at least two brackets 40a and 40b are combined, the tab 32 can be first extended from one end of the main body 31, and then a mounting boss 45 disposed on an end face, adjacent to the bracket 40a, of the bracket 40b can be in snap fit with a mounting hole disposed on an end face, adjacent to the bracket 40b, of the bracket 40a, so that the at least two detachable brackets 40a and 40b are combined into the first isolation member 40.

After the combination into the first isolation member 40, the tab 32 passing through the channel 45 can be maintained by the channel 46 on the first isolation member 40. This structure can effectively reduce assembly difficulties between the electrode assembly 30 and the first isolation member 40 and improve assembly efficiency.

Based on various embodiments of the foregoing battery cell of the present disclosure, the present disclosure further provides an embodiment of a battery using the embodiments of the foregoing battery cell. The battery includes the battery cell in any of the foregoing embodiments. The battery using the embodiments of the foregoing battery cell can obtain better service reliability.

In one aspect of the present disclosure, an electrical device is provided, including the foregoing battery. The electrical device including the foregoing battery can obtain better service reliability.

Although the present disclosure is described with reference to the preferred embodiments, various improvements can be made and equivalents can be substituted for components therein without departing from the scope of the present invention, as defined by the appended claims. The present disclosure is not limited to the specific embodiments disclosed herein, but includes all technical solutions falling within the scope of the claims.

## Claims

1. A battery cell (10), comprising:
an end cover assembly (20), comprising a cover plate (21) and a second isolation member (22) disposed on the cover plate (21);
an electrode assembly (30), comprising a main body (31); and
a first isolation member (40), located between the end cover assembly (20) and the main body (31) and configured to limit the main body (31),
wherein the first isolation member (40) abuts against a surface of the cover plate (21) adjacent to the main body (31) and encloses a cavity (S) together with the cover plate (21), and the second isolation member (22) is at least partially located in the cavity (S); and **characterized in that**
the second isolation member (22) is configured to limit the first isolation member (40) in at least one of a first direction (x) and a second direction (y), and be in clearance fit with the first isolation member (40) in at least one of the first direction (x) and the second direction (y), the first direction (x) and the second direction (y) being perpendicular to each other and both perpendicular to a thickness direction of the cover plate (21).

2. The battery cell (10) according to claim 1, wherein in the first direction (x), a distance g1 between the first isolation member (40) and the second isolation member (22) is 0.1-1 mm, and/or in the second direction (y), a distance g2 between the first isolation member (40) and the second isolation member (22) is 0.1-1 mm.

3. The battery cell (10) according to claim 1 or 2, wherein the main body (31) is flat, and the first direction (x) is a thickness direction of the main body (31).

4. The battery cell (10) according to any one of claims 1-3, wherein the second isolation member (22) is configured to limit the first isolation member (40) in the thickness direction of the cover plate (21), and be in clearance fit with the first isolation member (40) in the thickness direction of the cover plate (21).

5. The battery cell (10) according to claim 4, wherein in the thickness direction of the cover plate (21), a distance g3 between the first isolation member (40) and the second isolation member (22) is 0.1-1 mm.

6. The battery cell (10) according to any one of claims 1-5, wherein the end cover assembly (20) further comprises a pole (23) disposed on the cover plate (21), the electrode assembly (30) further comprises a tab (32) located at an end of the main body (31) adjacent to the end cover assembly (20), the tab (32) passes through a channel (46) of the first isolation member (40) and is electrically connected to the pole (23), and at least a portion of the pole (23) and the tab (32) are both located in the cavity (S).

7. The battery cell (10) according to claim 6, wherein the tab (32) is bent on a side adjacent to the cover plate (21), a bent portion of the tab (32) is fixedly connected to an end of the pole (23) adjacent to the main body (31), and in the thickness direction of the cover plate (21), a minimum distance D between the channel (46) and the end of the pole (23) adjacent to the main body (31) satisfies: $2 * t \leq D \leq 6 * t ;$ wherein t is a thickness of the tab (32).

8. The battery cell (10) according to any one of claims 1-7, wherein an inner wall surface of the cavity (S) comprises a step surface (43), the step surface (43) is in clearance fit with the second isolation member (22) in the thickness direction of the cover plate (21), and the second isolation member (22) is configured to limit the step surface (43) in the thickness direction of the cover plate (21).

9. The battery cell (10) according to claim 8, wherein the inner wall surface of the cavity (S) further comprises a first inner wall segment (41) and a second inner wall segment (42) divided by the step surface (43) in the thickness direction of the cover plate (21), the first inner wall segment (41) is located on a side of the second inner wall segment (42) away from the cover plate (21), the second inner wall segment (42) is in clearance fit with the second isolation member (22) in at least one of the first direction (x) and the second direction (y), and the second isolation member (22) is configured to limit the second inner wall segment (42) in at least one of the first direction (x) and the second direction (y), wherein the first direction (x) and the second direction (y) are perpendicular to each other and both perpendicular to the thickness direction of the cover plate (21).

10. The battery cell (10) according to claim 9, wherein in the first direction (x), a spatial width w1 corresponding to the first inner wall segment (41) is less than a spatial width w2 corresponding to the second inner wall segment (42); and/or in the second direction (y), a spatial width w1 corresponding to the first inner wall segment (41) is less than a spatial width w2 corresponding to the second inner wall segment (42).

11. The battery (10) according to claim 9, wherein in the first direction (x), a thickness t1 of a portion of the first isolation member (40) corresponding to the first inner wall segment (41) is greater than a thickness t2 of a portion of the first isolation member (40) corresponding to the second inner wall segment (42); and/or in the second direction (y), a thickness t1 of a portion of the first isolation member (40) corresponding to the first inner wall segment (41) is greater than a thickness t2 of a portion of the first isolation member (40) corresponding to the second inner wall segment (42).

12. The battery cell (10) according to claim 6 or 7, wherein the first isolation member (40) has an outer surface (47) adjacent to the main body (31) in the thickness direction of the cover plate (21) and in contact with a portion of the tab (32), and the outer surface (47) is provided with the channel (46) for the tab (32) to pass through and communicate with the cavity (S); and in the thickness direction of the cover plate (21), a distance H1 between an end of the outer surface (47) away from the channel (46) and the cover plate (21) is greater than a distance H2 between an end of the outer surface (47) adjacent to the channel (46) and the cover plate (21); and preferably, the first isolation member (40) comprises at least two detachable brackets (40a, 40b), and the at least two brackets (40a, 40b) are combined to enclose, together with the cover plate (21), the cavity (S) and the channel (46) in communication with the cavity (S).

13. The battery cell (10) according to any one of claims 1-12, wherein the end cover assembly (20) comprises the cover plate (21), and in the thickness direction of the cover plate (21), a projection of the first isolation member (40) on a surface of the cover plate (21) is located within a projection of the main body (31) on the surface of the cover plate (21).

14. A battery (50), comprising the battery cell (10) according to any one of claims 1-13.

15. An electrical device, comprising the battery (50) according to claim 14.

## Patentansprüche

1. Batteriezelle (10), umfassend:
eine Endabdeckungsanordnung (20), die eine Abdeckplatte (21) und ein auf der Abdeckplatte (21) angeordnetes zweites Isolierelement (22) umfasst;
eine Elektrodenanordnung (30), die einen Hauptkörper (31) umfasst; und
ein erstes Isolierelement (40), das sich zwischen der Endabdeckungsanordnung (20) und dem Hauptkörper (31) befindet und dazu ausgelegt ist, den Hauptkörper (31) zu begrenzen,
wobei das erste Isolierelement (40) an einer an den Hauptkörper (31) angrenzenden Oberfläche der Abdeckplatte (21) anliegt und zusammen mit der Abdeckplatte (21) einen Hohlraum (S) umschließt, und wobei sich das zweite Isolierelement (22) zumindest teilweise in dem Hohlraum (S) befindet; und **dadurch gekennzeichnet, dass**
das zweite Isolierelement (22) dazu ausgelegt ist, das erste Isolierelement (40) in mindestens einer einer ersten Richtung (x) und einer zweiten Richtung (y) zu begrenzen und in mindestens einer der ersten Richtung (x) und der zweiten Richtung (y) in Spielpassung mit dem ersten Isolierelement (40) zu stehen, wobei die erste Richtung (x) und die zweite Richtung (y) senkrecht zueinander stehen und beide senkrecht zu einer Dickenrichtung der Abdeckplatte (21) stehen.

2. Batteriezelle (10) nach Anspruch 1, wobei in der ersten Richtung (x) ein Abstand g1 zwischen dem ersten Isolierelement (40) und dem zweiten Isolierelement (22) 0,1-1 mm beträgt und/oder in der zweiten Richtung (y) ein Abstand g2 zwischen dem ersten Isolierelement (40) und dem zweiten Isolierelement (22) 0,1-1 mm beträgt.

3. Batteriezelle (10) nach Anspruch 1 oder 2, wobei der Hauptkörper (31) flach ist und die erste Richtung (x) eine Dickenrichtung des Hauptkörpers (31) ist.

4. Batteriezelle (10) nach einem der Ansprüche 1-3, wobei das zweite Isolierelement (22) dazu ausgelegt ist, das erste Isolierelement (40) in der Dickenrichtung der Abdeckplatte (21) zu begrenzen und in der Dickenrichtung der Abdeckplatte (21) in Spielpassung mit dem ersten Isolierelement (40) zu stehen.

5. Batteriezelle (10) nach Anspruch 4, wobei in der Dickenrichtung der Abdeckplatte (21) ein Abstand g3 zwischen dem ersten Isolierelement (40) und dem zweiten Isolierelement (22) 0,1-1 mm beträgt.

6. Batteriezelle (10) nach einem der Ansprüche 1-5, wobei die Endabdeckungsanordnung (20) ferner einen auf der Abdeckplatte (21) angeordneten Pol (23) umfasst, wobei die Elektrodenanordnung (30) ferner eine Lasche (32) umfasst, die sich an einem an die Endabdeckungsanordnung (20) angrenzenden Ende des Hauptkörpers (31) befindet, wobei die Lasche (32) durch einen Kanal (46) des ersten Isolierelements (40) verläuft und elektrisch mit dem Pol (23) verbunden ist und sich mindestens ein Abschnitt des Pols (23) und der Lasche (32) beide in dem Hohlraum (S) befinden.

7. Batteriezelle (10) nach Anspruch 6, wobei die Lasche (32) auf einer an die Abdeckplatte (21) angrenzenden Seite gebogen ist, wobei ein gebogener Abschnitt der Lasche (32) fest mit einem an den Hauptkörper (31) angrenzenden Ende des Pols (23) verbunden ist und in der Dickenrichtung der Abdeckplatte (21) ein Mindestabstand D zwischen dem Kanal (46) und dem an den Hauptkörper (31) angrenzenden Ende des Pols (23) Folgendes erfüllt:$2 * t \leq D \leq 6 * t ;$ wobei t eine Dicke der Lasche (32) ist.

8. Batteriezelle (10) nach einem der Ansprüche 1-7, wobei eine Innenwandfläche des Hohlraums (S) eine gestufte Oberfläche (43) umfasst, wobei die gestufte Oberfläche (43) in der Dickenrichtung der Abdeckplatte (21) in Spielpassung mit dem zweiten Isolierelement (22) steht und das zweite Isolierelement (22) dazu ausgelegt ist, die gestufte Oberfläche (43) in der Dickenrichtung der Abdeckplatte (21) zu begrenzen.

9. Batteriezelle (10) nach Anspruch 8, wobei die Innenwandfläche des Hohlraums (S) ferner ein erstes Innenwandsegment (41) und ein zweites Innenwandsegment (42) umfasst, die durch die gestufte Oberfläche (43) in der Dickenrichtung der Abdeckplatte (21) getrennt sind, wobei sich das erste Innenwandsegment (41) auf einer von der Abdeckplatte (21) entfernten Seite des zweiten Innenwandsegments (42) befindet, wobei das zweite Innenwandsegment (42) in mindestens einer der ersten Richtung (x) und der zweiten Richtung (y) in Spielpassung mit dem zweiten Isolierelement (22) steht und das zweite Isolierelement (22) dazu ausgelegt ist, das zweite Innenwandsegment (42) in mindestens einer der ersten Richtung (x) und der zweiten Richtung (y) zu begrenzen, wobei die erste Richtung (x) und die zweite Richtung (y) senkrecht zueinander stehen und beide senkrecht zur Dickenrichtung der Abdeckplatte (21) stehen.

10. Batteriezelle (10) nach Anspruch 9, wobei in der ersten Richtung (x) eine räumliche Breite w1, die dem ersten Innenwandsegment (41) entspricht, kleiner als eine räumliche Breite w2 ist, die dem zweiten Innenwandsegment (42) entspricht; und/oder wobei in der zweiten Richtung (y) eine räumliche Breite w1, die dem ersten Innenwandsegment (41) entspricht, kleiner als eine räumliche Breite w2 ist, die dem zweiten Innenwandsegment (42) entspricht.

11. Batterie (10) nach Anspruch 9, wobei in der ersten Richtung (x) eine Dicke t1 eines Abschnitts des ersten Isolierelements (40), der dem ersten Innenwandsegment (41) entspricht, größer als eine Dicke t2 eines Abschnitts des ersten Isolierelements (40) ist, der dem zweiten Innenwandsegment (42) entspricht; und/oder wobei in der zweiten Richtung (y) eine Dicke t1 eines Abschnitts des ersten Isolierelements (40), der dem ersten Innenwandsegment (41) entspricht, größer als eine Dicke t2 eines Abschnitts des ersten Isolierelements (40) ist, der dem zweiten Innenwandsegment (42) entspricht.

12. Batteriezelle (10) nach Anspruch 6 oder 7, wobei das erste Isolierelement (40) eine Außenfläche (47) aufweist, die in der Dickenrichtung der Abdeckplatte (21) an den Hauptkörper (31) angrenzt und mit einem Abschnitt der Lasche (32) in Kontakt steht, und die Außenfläche (47) mit einem Kanal (46) versehen ist, durch den die Lasche (32) hindurch verlaufen und mit dem Hohlraum (S) kommunizieren kann; und wobei in der Dickenrichtung der Abdeckplatte (21) ein Abstand H1 zwischen einem von dem Kanal (46) entfernten Ende der Außenfläche (47) und der Abdeckplatte (21) größer als ein Abstand H2 zwischen einem an den Kanal (46) angrenzenden Ende der Außenfläche (47) und der Abdeckplatte (21) ist; und wobei vorzugsweise das erste Isolierelement (40) mindestens zwei abnehmbare Halterungen (40a, 40b) umfasst und die mindestens zwei Halterungen (40a, 40b) kombiniert sind, um zusammen mit der Abdeckplatte (21) den Hohlraum (S) und den Kanal (46) in Kommunikation mit dem Hohlraum (S) zu umschließen.

13. Batteriezelle (10) nach einem der Ansprüche 1-12, wobei die Endabdeckungsanordnung (20) die Abdeckplatte (21) umfasst und sich in der Dickenrichtung der Abdeckplatte (21) eine Projektion des ersten Isolierelements (40) auf eine Oberfläche der Abdeckplatte (21) innerhalb einer Projektion des Hauptkörpers (31) auf die Oberfläche der Abdeckplatte (21) befindet.

14. Batterie (50), die die Batteriezelle (10) nach einem der Ansprüche 1-13 umfasst.

15. Elektrische Vorrichtung, die die Batterie (50) nach Anspruch 14 umfasst.

## Revendications

1. Cellule de batterie (10), comprenant :
un ensemble de couvercle d'extrémité (20), comprenant une plaque de couvercle (21) et un deuxième élément d'isolation (22) disposé sur la plaque de couvercle (21) ;
un ensemble d'électrodes (30), comprenant un corps principal (31) ; et
un premier élément d'isolation (40), situé entre l'ensemble de couvercle d'extrémité (20) et le corps principal (31) et configuré pour limiter le corps principal (31),
le premier élément d'isolation (40) venant en butée contre une surface de la plaque de couvercle (21) adjacente au corps principal (31) et délimitant une cavité (S) conjointement avec la plaque de couvercle (21), et le deuxième élément d'isolation (22) étant situé au moins partiellement dans la cavité (S) ; et **caractérisée en ce que**
le deuxième élément d'isolation (22) est configuré pour limiter le premier élément d'isolation (40) dans au moins une parmi une première direction (x) et une deuxième direction (y), et pour être ajusté avec jeu par rapport au premier élément d'isolation (40) dans au moins une parmi la première direction (x) et la deuxième direction (y), la première direction (x) et la deuxième direction (y) étant perpendiculaires l'une à l'autre et étant toutes deux perpendiculaires à une direction d'épaisseur de la plaque de couvercle (21).

2. Cellule de batterie (10) selon la revendication 1, dans laquelle, dans la première direction (x), une distance g1 entre le premier élément d'isolation (40) et le deuxième élément d'isolation (22) est comprise entre 0,1 et 1 mm, et/ou, dans la deuxième direction (y), une distance g2 entre le premier élément d'isolation (40) et le deuxième élément d'isolation (22) est comprise entre 0,1 et 1 mm.

3. Cellule de batterie (10) selon la revendication 1 ou 2, dans laquelle le corps principal (31) est plat, et la première direction (x) est une direction d'épaisseur du corps principal (31).

4. Cellule de batterie (10) selon l'une quelconque des revendications 1 à 3, dans laquelle le deuxième élément d'isolation (22) est configuré pour limiter le premier élément d'isolation (40) dans la direction d'épaisseur de la plaque de couvercle (21), et pour être ajusté avec jeu par rapport au premier élément d'isolation (40) dans la direction d'épaisseur de la plaque de couvercle (21).

5. Cellule de batterie (10) selon la revendication 4, dans laquelle, dans la direction d'épaisseur de la plaque de couvercle (21), une distance g3 entre le premier élément d'isolation (40) et le deuxième élément d'isolation (22) est comprise entre 0,1 et 1 mm.

6. Cellule de batterie (10) selon l'une quelconque des revendications 1 à 5, dans laquelle l'ensemble de couvercle d'extrémité (20) comprend en outre un pôle (23) disposé sur la plaque de couvercle (21), l'ensemble d'électrodes (30) comprend en outre une languette (32) située à une extrémité du corps principal (31) adjacente à l'ensemble de couvercle d'extrémité (20), la languette (32) traverse un canal (46) du premier élément d'isolation (40) et est électriquement connectée au pôle (23), et au moins une partie du pôle (23) et la languette (32) sont toutes deux situées dans la cavité (S).

7. Cellule de batterie (10) selon la revendication 6, dans laquelle la languette (32) est pliée sur un côté adjacent à la plaque de couvercle (21), une partie pliée de la languette (32) est solidaire d'une extrémité du pôle (23) adjacente au corps principal (31), et, dans la direction d'épaisseur de la plaque de couvercle (21), une distance minimale D entre le canal (46) et l'extrémité du pôle (23) adjacente au corps principal (31) vérifie :$2 * t \leq D \leq 6 * t ;$ où t est une épaisseur de la languette (32).

8. Cellule de batterie (10) selon l'une quelconque des revendications 1 à 7, dans laquelle une surface de paroi interne de la cavité (S) comprend une surface en gradin (43), la surface en gradin (43) est ajustée avec jeu par rapport au deuxième élément d'isolation (22) dans la direction d'épaisseur de la plaque de couvercle (21), et le deuxième élément d'isolation (22) est configuré pour limiter la surface en gradin (43) dans la direction d'épaisseur de la plaque de couvercle (21).

9. Cellule de batterie (10) selon la revendication 8, dans laquelle la surface de paroi interne de la cavité (S) comprend en outre un premier segment de paroi interne (41) et un deuxième segment de paroi interne (42) séparés par la surface en gradin (43) dans la direction d'épaisseur de la plaque de couvercle (21), le premier segment de paroi interne (41) est situé sur un côté du deuxième segment de paroi interne (42) éloigné de la plaque de couvercle (21), le deuxième segment de paroi interne (42) est ajusté avec jeu par rapport au deuxième élément d'isolation (22) dans au moins une parmi la première direction (x) et la deuxième direction (y), et le deuxième élément d'isolation (22) est configuré pour limiter le deuxième segment de paroi interne (42) dans au moins une parmi la première direction (x) et la deuxième direction (y), la première direction (x) et la deuxième direction (y) étant perpendiculaires l'une à l'autre et étant toutes deux perpendiculaires à la direction d'épaisseur de la plaque de couvercle (21).

10. Cellule de batterie (10) selon la revendication 9, dans laquelle, dans la première direction (x), une largeur spatiale w1 correspondant au premier segment de paroi interne (41) est inférieure à une largeur spatiale w2 correspondant au deuxième segment de paroi interne (42) ; et/ou, dans la deuxième direction (y), une largeur spatiale w1 correspondant au premier segment de paroi interne (41) est inférieure à une largeur spatiale w2 correspondant au deuxième segment de paroi interne (42).

11. Batterie (10) selon la revendication 9, dans laquelle, dans la première direction (x), une épaisseur t1 d'une partie du premier élément d'isolation (40) correspondant au premier segment de paroi interne (41) est supérieure à une épaisseur t2 d'une partie du premier élément d'isolation (40) correspondant au deuxième segment de paroi interne (42) ; et/ou, dans la deuxième direction (y), une épaisseur t1 d'une partie du premier élément d'isolation (40) correspondant au premier segment de paroi interne (41) est supérieure à une épaisseur t2 d'une partie du premier élément d'isolation (40) correspondant au deuxième segment de paroi interne (42).

12. Cellule de batterie (10) selon la revendication 6 ou 7, dans laquelle le premier élément d'isolation (40) présente une surface externe (47) adjacente au corps principal (31) dans la direction d'épaisseur de la plaque de couvercle (21) et en contact avec une partie de la languette (32), et la surface externe (47) est pourvue du canal (46) permettant le passage de la languette (32) et sa communication avec la cavité (S) ; et, dans la direction d'épaisseur de la plaque de couvercle (21), une distance H1 entre une extrémité de la surface externe (47) éloignée du canal (46) et la plaque de couvercle (21) est supérieure à une distance H2 entre une extrémité de la surface externe (47) adjacente au canal (46) et la plaque de couvercle (21) ; et, de préférence, le premier élément d'isolation (40) comprend au moins deux étriers (40a, 40b) détachables, et les au moins deux étriers (40a, 40b) sont combinés afin de délimiter, conjointement avec la plaque de couvercle (21), la cavité (S) et le canal (46) en communication avec la cavité (S).

13. Cellule de batterie (10) selon l'une quelconque des revendications 1 à 12, dans laquelle l'ensemble de couvercle d'extrémité (20) comprend la plaque de couvercle (21), et, dans la direction d'épaisseur de la plaque de couvercle (21), une projection du premier élément d'isolation (40) sur une surface de la plaque de couvercle (21) est située au sein d'une projection du corps principal (31) sur la surface de la plaque de couvercle (21).

14. Batterie (50), comprenant la cellule de batterie (10) selon l'une quelconque des revendications 1 à 13.

15. Dispositif électrique, comprenant la batterie (50) selon la revendication 14.
